# EUROPEAN PATENT APPLICATION

(11) **EP 4 492 562 A1**
(43) Date of publication of application: **15.01.2025**
(21) Application number: 22956773.0
(22) Date of filing: 30.08.2022
(51) Int. Cl.: H01M 50/569, H01M 10/48

(54) **BATTERY CELL, BATTERY, AND ELECTRIC APPARATUS**

(71) Applicant: Contemporary Amperex Runzhi Software Technology Limited, Ningde, Fujian 352100 (CN)
(72) Inventor: CHEN, Long, Ningde, Fujian 352100 (CN); LIN, Denghua, Ningde, Fujian 352100 (CN); ZHENG, Yulian, Ningde, Fujian 352100 (CN); WANG, Peng, Ningde, Fujian 352100 (CN); JIN, Haizu, Ningde, Fujian 352100 (CN)
(74) Representative: Herrmann, Uwe
(86) International application number: PCT/CN2022/115734
(87) International publication number: WO 2024/044938

(57) **Abstract**

A battery cell, a battery and an electricity-consuming device are provided by the present application. The battery cell includes a casing and a connecting terminal. The casing includes a mounting hole. The connecting terminal is at least partially arranged in the mounting hole, insulated from the casing, and configured for information exchange between an interior and an exterior of the battery cell. The battery cell provided by the present application can achieve the information exchange between the interior and the exterior of the battery cell, so as to transmit the information such as the working condition at the interior of the battery cell to the exterior of the battery cell, or transmit the information such as a control signal from the exterior the battery cell to the interior of the battery cell, thereby facilitating the information exchange between a related component inside the battery cell and a related component outside the battery cell, ensuring the normal operation of the battery cell, and improving the safety performance of the battery cell.

## Description

### TECHNICAL FIELD

The present application relates to the technical field of batteries, and in particular to a battery cell, a battery and an electricity-consuming device.

### BACKGROUND

A battery is widely used in an electricity device, such as a mobile phone, a laptop, a battery vehicle, an electric car, an electric plane, an electric ship, an electric toy car, an electric toy ship, an electric toy plane and an electric tool. A battery cell may include a cadmium nickel battery cell, a hydrogen nickel battery cell, a lithium-ion battery cell, a secondary alkaline zinc manganese battery cell or the like.

In the development of the battery cell technology, in addition to improving the performance of the battery cell, the safety problem also cannot be ignored. Therefore, how to improve the safety performance of the battery cell is a technical problem that needs continuous improvement in the technology of the battery cell.

### SUMMARY

The present application provides a battery cell, a battery and an electricity-consuming device, which can improve the safety performance of the battery cell.

In a first aspect, embodiments of the present application provide a battery cell including a casing and a connecting terminal. The casing includes a mounting hole. The connecting terminal is at least partially arranged in the mounting hole, insulated from the casing, and configured for information exchange between an interior and an exterior of the battery cell.

In the battery cell provided by the present application, the casing is provided with the mounting hole, and the connecting terminal is at least partially arranged in the mounting hole, so that the information exchange between the interior and the exterior of the battery cell can be achieved, so as to transmit the information such as the working condition at the interior of the battery cell to the exterior of the battery cell, or transmit the information such as a control signal from the exterior the battery cell to the interior of the battery cell, thereby facilitating the information exchange between a related component inside the battery cell and a related component outside the battery cell, ensuring the normal operation of the battery cell, and improving the safety performance of the battery cell.

In some embodiments, there are a plurality of mounting holes spaced apart from one another, and the connecting terminal is arranged in each of the mounting holes.

According to the arrangement, the transmission of the information between the interior and exterior of the battery cell can be achieved, and the simultaneous transmission of multiple types of information between the interior and exterior of the battery cell can be achieved.

In some embodiments, the battery cell further includes an insulating member, and the insulating member is at least partially arranged between the connecting terminal and an inner wall of the mounting hole.

Thus, the insulation between the connecting terminal and the casing can be achieved, so that the connecting terminal can transmit the information more accurately and quickly.

In some embodiments, one of the connecting terminal and the insulating member is provided with a groove, the other is provided with a protrusion, and the groove cooperates with the protrusion. By cooperating the groove and the protrusion, positions of the connecting terminal and insulating member can be limited, so as to reduce the risk of the relative movement between the connecting terminal and the insulating member.

In some embodiments, the protrusion is circular and formed on a peripheral surface of the connecting terminal, and the groove is circular and formed on the inner wall of the insulating member. Thus, the assembly difficulty between the connecting terminal and the insulating member can be reduced, while the limiting effect of the protrusion and groove on the connecting terminal and insulating member can be improved.

In some embodiments, a distance h1 of a portion of the protrusion protruding from the peripheral surface of the connecting terminal satisfies: h1≥0.1mm. Thus, a mutual cooperation area between the protrusion and the groove can be ensured, and the mutual limiting effect between the connecting terminal and the insulating member can be ensured.

In some embodiments, the connecting terminal is provided with a plurality of protrusions spaced apart from one another, and a distance L between two adjacent protrusions satisfies: L≥0.1mm. The connecting terminal is provided with the plurality of protrusions spaced apart from one another, so that the mutual cooperation areas between the protrusions and the grooves can be ensured, and the mutual limiting effect between the connecting terminal and the insulating member can be further ensured. The distance L between two adjacent protrusions satisfies the above relationship, so as to facilitate the processing of protrusions and grooves, and also conduce to further improving the limiting effect of the cooperation between the protrusions and grooves on the connecting terminal and the insulating member.

In some embodiments, the casing includes a first wall, and the mounting hole penetrates through the first wall. The mounting hole penetrates through the first wall, so as to facilitate the mounting of the connecting terminal.

In some embodiments, the battery cell further includes an electrode terminal arranged on the first wall, and the electrode terminal is configured to transmit electrical energy and spaced apart from the connecting terminal. The electrode terminal is spaced apart from the connecting terminal, so as to reduce the risk of the conductivity between the electrode terminal and the connecting terminal affecting the normal operation of the battery cell. Both the electrode terminal and the connecting terminal are arranged on the first wall, so as to reduce an external space of the battery cell additionally occupied by arranging the connecting terminal and electrode terminal, facilitate grouping the battery cells into a battery, reduce a volume of the battery grouped by the battery cells, and improve the energy density of the battery.

In some embodiments, a distance of a portion of the connecting terminal protruding from a side of the first wall is less than or equal to a distance of a portion of the electrode terminal protruding from the same side of the first wall in a thickness direction of the first wall. Thus, the additional space outside the battery cell in the thickness direction occupied by arranging the connecting terminal can be reduced, and after the battery cells are grouped, a volume of an interior of the battery occupied by the battery cells can be reduced, so as to improve the energy density of the battery.

In some embodiments, the battery cell further includes a sealing member, which is at least partially abutted between the first wall and the connecting terminal in a thickness direction of the first wall. The sealing member is arranged, so as to achieve the sealing of the accommodating chamber of the battery cell, reduce the risk of the external impurities entering the interior of the battery cell and corroding the battery cell, and reduce the risk of the leakage of electrolyte liquid inside the battery cell.

In some embodiments, the battery cell further includes a connecting member, which is located on a peripheral side of the insulating member and connected to the first wall. Thus, the connecting strength between the connecting terminal and insulating member can be improved, and the mounting of the connecting terminal can be achieved, and the assembly process of the connecting member can be simplified.

In some embodiments, the connecting member is welded to the casing. According to the arrangement, the stability of the connection between the connecting terminal and the first wall can be further improved.

In some embodiments, the insulating member is formed by injection molding and connected to the connecting member and the connecting terminal. Thus, the manufacturing process of battery cell can be simplified, and the connection strength between the connecting terminal and the first wall can be improved.

In some embodiments, the connecting terminal includes a first sub-portion and a second sub-portion connected to each other, and the first wall is arranged between the first sub-portion and the second sub-portion. According to the arrangement, the connection between the connecting terminal and the first wall can be achieved.

In some embodiments, the first sub-portion is riveted to the second sub-portion. According to the arrangement, the connection strength between the first sub-portion and the second sub portion can be improved, and the connection process between the first sub-portion and the second sub-portion can be simplified.

In some embodiments, the casing includes a first wall and an electrode terminal arranged on the first wall, the electrode terminal is configured to transmit electrical energy and is insulated from the first wall, the mounting hole penetrates through the electrode terminal in a thickness direction of the first wall, and the connecting terminal is connected to the electrode terminal. Thus, a space on the first wall can be saved, other components can be arranged on the first wall, and the reasonable arrangement of various components of the battery cell can be achieved.

In some embodiments, the battery cell further includes a current collector and an electrode assembly, the current collector and the electrode assembly are accommodated in the casing, the current collector is electrically connected to the electrode assembly and the electrode terminal, and the current collector is provided with a through hole; the connecting terminal is arranged to pass through the through hole; or the battery cell further includes a connecting wire, which passes through the through hole and is electrically connected to the connecting terminal. Thus, even in the case that the current collector covers the electrode terminal, the electrical connection between the connecting terminal and the internal components of the battery cell can still be achieved, so as to facilitate the connecting terminal transmitting the information.

In some embodiments, the battery cell further includes a detecting element. The detecting element is arranged in the accommodating chamber, configured to detect a working condition of the battery cell, and electrically connected to the connecting terminal. The battery cell is provided with the detecting element, the working condition of the battery cell can be detected by the detecting element, so that the normal operation of the battery cell can be ensured and the safety performance of the battery cell can be improved.

In some embodiments, the detecting element includes a sensor, so as to further ensure the normal operation of the battery cell, and improve the safety performance of the battery cell.

In a second aspect, embodiments of the present application provide a battery including the battery cell according to any one of the embodiments in the first aspect.

According to the embodiments of the present application, the battery has the same technical effect as described above due to including the battery cell according to the embodiments of the present application, which will not be repeated here.

In some embodiments, the battery further includes a control unit, and the control unit is electrically connected to the connecting terminal and configured to transmit an information to the connecting terminal.

The control element can transmit the information such as the control signal to the connecting terminal, and transmit it to a related performing component inside the battery cell through the connecting terminal. Alternatively, the connecting terminal can transmit information such as pressure, temperature, stress and gas composition inside the battery cell to the control element, so that the control element can estimate the working condition of the battery cell, control a related component to adjust the working parameter, or issue an alarm for the operator to adjust the working parameter of the battery. Thus, as the safety performance of the battery can be improved, the normal operation of the battery can be further ensured.

In a third aspect, embodiments of the present application provide an electricity-consuming device including the battery according to any one of the embodiments in the second aspect, which is configured to provide electrical energy.

According to the embodiments of the present application, the electricity-consuming device has the same technical effect as described above due to including the battery according to the embodiments of the present application, which will not be repeated here.

### BRIEF DESCRIPTION OF THE DRAWINGS

In order to more clearly illustrate the technical solutions of the embodiments of the present application, the drawings to be used in the description of the embodiments of the present application will be described briefly below. Obviously, the drawings in the following description are merely some embodiments of the present application. For those skilled in the art, other drawings can also be obtained according to these drawings without the inventive labor.
Fig. 1 shows a structural schematic view of a vehicle according to an embodiment of the present application;
Fig. 2 shows an exploded structural schematic view of a battery according to an embodiment of the present application;
Fig. 3 shows a structural schematic view of a battery module in a battery according to an embodiment of the present application;
Fig. 4 shows an exploded schematic view of a battery cell according to some embodiments of the present application;
Fig. 5 shows a structural schematic view of a battery cell which omits a portion of structure according to an embodiment of present application;
Fig. 6 shows a cross-sectional structural view along line A-A in Fig. 5;
Fig. 7 shows a structural schematic view of another battery cell which omits a portion of structure according to an embodiment of present application;
Fig. 8 shows a cross-sectional structural view along line B-B in Fig. 7;
Fig. 9 shows an exploded schematic view of Fig. 7;
Fig. 10 shows a structural schematic view of another battery cell which omits a portion of structure according to an embodiment of present application;
Fig. 11 shows a cross-sectional structural view along line C-C in Fig. 10;
Fig. 12 shows an exploded schematic view of Fig. 10;
Fig. 13 shows a structural schematic view of another battery cell which omits a portion of structure according to an embodiment of present application;
Fig. 14 shows a cross-sectional structural view along line C-C in Fig. 13;
Fig. 15 shows a locally enlarged view at portion E in Fig. 14; and
Fig. 16 shows another locally enlarged view at portion E in Fig. 14.

In the drawings, the drawings are not drawn to actual scale.

The reference numerals are as follows:
1. vehicle; 1a. motor; 1b. controller;
10. battery; 11. first housing portion; 12. second housing portion;
20. battery module;
30. battery cell; 31. casing; 31a. accommodating chamber; 31b. mounting hole; 311. casing body; 311a. opening; 312. end cover; 313. first wall; 32. electrode assembly; 321. electrode body; 322. electrode tab; 33. connecting terminal; 331. first sub-portion; 332. second sub-portion; 33a. protrusion; 34. insulating member; 34a, groove; 35. electrode terminal; 36. sealing member; 37. connecting member; 38. current collector; 38a. through hole; 39. detecting element;
X. thickness direction.

### DETAILED DESCRIPTION

In order to make the objects, technical solutions and advantages of the embodiments of the present application more clear, the technical solutions of the embodiments of the present application will be clearly and completely described below in conjunction with the drawings of the embodiments of the present application. It is apparent that the described embodiments are a portion of the embodiments of the present application, and not all of them. Based on the embodiments of the present application, all other embodiments obtained by those skilled in the art without the creative labor fall within the scope of the present application.

Unless otherwise defined, technical terms or scientific terms used in the present disclosure should be interpreted according to common meanings thereof as commonly understood by those of ordinary skills in the art. The terms used in the description in the present application are only for the purpose of describing specific embodiments and are not intended to limit the present application. The terms "including" and "having" in the description and the claims of the present application and the above description of the drawings, and any variations thereof are intended to cover non-exclusive inclusions. The terms "first", "second", etc. in the description and the claims of the present application or the above-mentioned drawings are used to distinguish different objects, rather than to describe a specific order or a primary-secondary relationship.

The "embodiments" referred in the present application means that specific features, structures or characteristics described in conjunction with the embodiments may be included in at least one embodiment of the present application. This word appeared in various places in the description does not necessarily refer to the same embodiment, nor is it an independent or alternative embodiment mutually exclusive with other embodiments.

In the description of the present application, it should be noted that, unless otherwise clearly specified and limited, the terms "mount", "connecting" and "connection" and "attach" should be understood in a broad sense, for example, it can be a fixed connection, a detachable connection, or an integral connection, it can be connected directly, it can be connected indirectly through an intermedium, or it can be a communication between two elements at insides thereof. For those of ordinary skill in the art, the specific meaning of the above-mentioned terms in the present application can be understood according to specific situations.

The term "and/or" in the present application is merely an association relationship describing associated objects, which means that there can be three types of relationships. For example, "A and/or B" can mean three cases that there is only A, there are A and B at the same time, and there is only B. In addition, the punctuation mark "/" in the present application generally indicates that the related objects of the preceding content and following content are in an "or" relationship.

In the embodiments of the present application, the same reference numerals denote the same components, and for the sake of brevity, in different embodiments, detailed descriptions of the same components are omitted. It should be understood that the thickness, distance, width and other sizes of the various components in the embodiments of the present application shown in the drawings, as well as the overall thickness, distance and width, etc., of the integrated device are only exemplary descriptions, and should not constitute any limitation to the present application.

The "plurality" in the present application refers to two or more (including two).

In embodiments of the present application, a battery cell may include, but not limited to, a lithium-ion secondary battery cell, a lithium-ion primary battery cell, a lithium-sulfur battery cell, a sodium lithium ion battery cell, a sodium ion battery cell, a magnesium ion battery cell and the like. In embodiments of the present application, the battery cell can be in a shape of, but not limited to, a cylinder, a flatten body, a cuboid or other shapes. In embodiments of the present application, the battery cell can include, but not limited to, three types according to the packaging method such as a cylindrical battery cell, a square battery cell and a soft packaging battery cell.

The battery mentioned in the embodiments of the present application refers to a single physical module that includes one or more battery cells to provide higher voltage and capacity. For example, the battery mentioned in the present application may include a battery module, a battery pack or the like. The battery generally includes a housing for packaging one or more battery cells. The housing can prevent liquid or other foreign objects from affecting the electrical charge or the electrical discharge of the battery cell.

The battery cell includes an electrode assembly and an electrolyte, and the electrode assembly includes a positive electrode sheet, a negative electrode sheet and a separator. The battery cell mainly relies on the movement of metal ions between the positive electrode sheet and the negative electrode sheet to work. The positive electrode sheet includes a positive electrode current collector and a positive electrode active material layer applied on the surface of the positive electrode current collector. The positive electrode current collector includes a positive electrode current collecting portion and a positive electrode protrusion protruding from the positive electrode current collecting portion. The positive electrode current collecting portion is coated with the positive electrode active material layer, and at least a portion of the positive electrode tab is not coated with the positive electrode active material layer. The positive electrode protrusion can be serve as a positive electrode tab. Taking a lithium ion battery as an example, the material of the positive electrode current collector may be aluminum, and the positive electrode active material layer includes a positive electrode active material, which may be lithium cobaltate, lithium iron phosphate, ternary lithium, lithium manganite or the like. The negative electrode sheet includes a negative electrode current collector and a negative electrode active material layer applied on the surface of the negative electrode current collector. The negative electrode current collector includes a negative electrode current collecting portion and a negative electrode protrusion protruding from the negative electrode current collecting portion. The negative electrode current collecting portion is coated with the negative electrode active material layer, and at least a portion of the negative electrode tab is not coated with the negative electrode active material layer. The negative electrode protrusion can be serve as a negative electrode tab. The material of the negative electrode current collector may be copper, and the negative electrode active material layer includes a negative electrode active material, which may be carbon, silicon or the like. In order to ensure the high current passing through without fusing, a plurality of positive electrode tabs are stacked together, and a plurality of negative electrode tabs are stacked together. The material of the separator may be PP (polypropylene), PE (polyethylene) or the like. In addition, the electrode assembly may be a winding-type structure or a stack-type structure, which is not limited in the embodiments of the present application.

After finding the problem of low safety performance of the battery cell, the inventors systematically analyzed and studied the structure and the operation process of battery cell. The results show that, during the operation, the battery cell experiences a plurality of cycles of charge and discharge, resulting in the side reaction and continually generating gas, which may lead to a certain air pressure inside the battery cell and a risk of deformation and structural strength failure of the battery cell. In addition, during the cycles, an electrode assembly inside the battery cell may expand, and the electrolyte liquid inside the battery cell may be consumed continually. If the internal abnormal phenomena that occur in the operation process of the battery cell could not be detected in time, the operator would not be able to take necessary measures, so that the internal abnormal phenomena would seriously affect the safety performance of the battery cell.

Based on the above-mentioned problems found by the inventors, the inventors have improved the structure of the battery cell. The technical solution described in the embodiments of present application is applicable to a battery cell, a battery including the battery cell and an electricity-consuming device using the battery.

The battery cell provided by the embodiments of the present application includes a casing and an electrical connecting terminal. The casing is provided with a mounting hole. At least a portion of the connecting terminal is arranged in the mounting hole and insulated from the casing. The connecting terminal is used for information exchange between an interior and an exterior of the battery cell.

The battery cell provided by the embodiments of the present application can transmit a working condition inside the battery cell to a control element outside the battery cell in time by arranging the connecting terminal, or transmit a control signal of the control element outside the battery cell to a performing component inside the battery cell, so as to achieve the information exchange between the interior and the exterior of the battery cell, facilitate understanding the working condition inside the battery cell in real time, or facilitate transmitting the control signal to the interior of the battery cell in time, which is conducive to improving the safety performance of the battery cell.

The electricity-consuming device may be a vehicle, a mobile phone, a portable device, a notebook computer, a ship, a spacecraft, an electric toy, an electric tool or the like. The vehicle may be a fuel car, a gas car or a new energy car, and the new energy car can be a pure electric car, a hybrid car, a range-extended car or the like; the spacecraft may include an airplane, a rocket, a space shuttle, a space ship or the like; the electric toy may include a fixed-type or mobile-type electric toy, such as a game player, an electric car toy, an electric ship toy, an electric airplane toy or the like; the power tool may include a metal cutting power tool, a grinding power tool, an assembly power tool and a railway power tools, such as an electric drill, an electric grinder, an electric wrench, an electric screwdriver, an electric hammer, an impact drill, a concrete vibrator, an electric planers or the like. Embodiments of the present application do not impose specific limitation to the above-mentioned electricity-consuming device.

For the convenience of explanation, the following embodiments take a vehicle being as the electricity-consuming device as an example to illustrate.

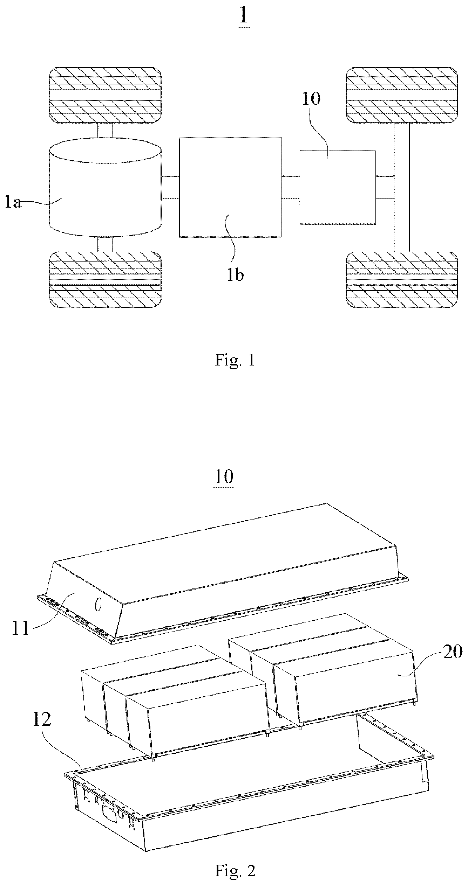

As shown in Fig. 1, a battery 10 may be arranged at the inside of the vehicle 1, and the battery 10 may be arranged in the bottom, the front or the back of the vehicle 1. The battery 10 can be used to supply power to the vehicle 1, for example, the battery 10 can be used as an operating power source of the vehicle 1.

The vehicle 1 may further include a controller 1b and a motor 1a. The controller 1b can be used to control the battery 10 to supply power to the motor 1a, for example, for satisfying the work electricity needs of the vehicle 1 during starting, navigating and driving.

In some embodiments of the present application, the battery 10 can not only serve as an operating power source for the vehicle 1, but also as a driving power source for the vehicle 1, so as to replace or partially replace the fuel or the natural gas and provide the driving power for the vehicle 1.

As shown in Fig. 2, the battery 10 includes a battery cell (not shown in Fig. 2) and a housing which is used to accommodate the battery cell.

The housing is used to accommodate the battery cell, and the housing can be of various structures. In some embodiments, the housing may include a first housing portion 11 and a second housing portion 12. The first housing portion 11 and the second housing portion 12 cover each other. The first housing portion 11 and the second housing portion 12 jointly define an accommodating space for accommodating the battery cell. The second housing portion 12 may be a hollow structure having an opening at an end, and the first housing portion 11 may be a plate-like structure. The first housing portion 11 is covered with the side of the second housing portion 12 with the opening to form the housing having the accommodating space. Or each of the first housing portion 11 and the second housing portion 12 may be a hollow structure having an opening on a side. The side of the first housing portion 11 with the opening is covered with the side of the second housing portion 12 with the opening to form the housing having the accommodation space. Of course, the first housing portion 11 and the second housing portion 12 may be in various shapes, such as a cylinder and a rectangular parallelepiped.

In order to improve the sealing performance after the first housing portion 11 is connected with the second housing portion 12, a sealing member, such as a sealant and a sealing ring, may be arranged between the first housing portion 11 and the second housing portion 12.

It can be assumed that the first housing portion 11 is covered with the second housing portion 12, the first housing portion 11 can be called an upper housing cover, and the second housing portion 12 can be called a lower housing portion.

In the battery 10, there may be one or more battery cells. If there are a plurality of battery cells, the plurality of battery cells can be connected in series, in parallel or in hybrid. The hybrid connection means that the plurality of battery cells are connected in series and parallel in combination. The plurality of battery cells can be directly connected in series, parallel or hybrid together, and then a whole composed of the plurality of battery cells can be accommodated in the housing. Or the plurality of battery cells can be connected in series, in parallel or hybrid to form the battery module 20. A plurality of battery modules 20 are connected in series, in parallel or in hybrid to form a whole and are accommodated in the housing.

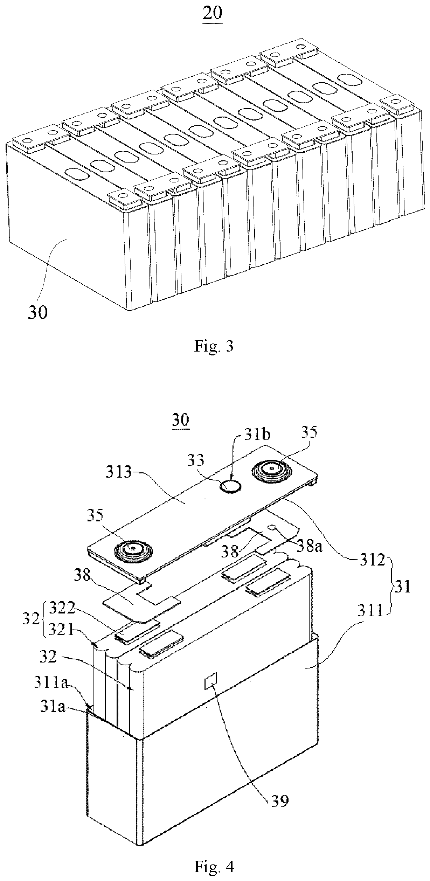

In some embodiments, as shown in Fig. 3, Fig. 3 is a structural schematic view of the battery module 20 shown in Fig. 2. The battery module 20 includes a plurality of battery cells 30. The plurality of battery cells 30 are connected in series, in parallel or in hybrid to form the battery module 20. The plurality of battery cells battery modules 20 are connected in series, in parallel or in hybrid to form a whole and are accommodated in the housing.

In some embodiments, the plurality of battery cells 30 in battery module 20 may be electrically connected with one another through a busbar, so as to achieve the parallel connection, the series connection or the hybrid connection among the plurality of battery cells 30 in the battery module 20.

Referring to Fig. 4, Fig. 4 shows an exploded schematic view of the battery cell 30 shown in Fig. 3. The battery cell 30 provided by the embodiments of the present application includes an electrode assembly 32 and a casing 31, the casing 31 is provided with an accommodating chamber 31a, and the electrode assembly 32 is accommodated in the accommodating chamber 31a.

In some embodiments, the casing 31 may include a casing body 311 and an end cover 312. The casing body 311 is a hollow structure with an opening 311a on a side, and the end cover 312 covers and sealingly connects with the opening 311a of the casing body 311, so as to form a sealing space for accommodating the electrode assembly 32 and the electrolyte.

When the battery cell 30 is assembled, the electrode assembly 32 can be placed into the casing body 311, then the end cover 312 covers the opening 311a of the casing body 311, and finally the electrolyte is injected into the casing body 311 through an electrolyte-injecting port on the end cover 312.

In some embodiments, the casing 31 may also be used to accommodate the electrolyte, such as electrolyte liquid. The casing 31 can be in form of various structures.

Fig. 4 shows a structural schematic view of the battery cell 30 according to some embodiments of the present application.

The casing body 311 can be of various shapes, such as cylinder or cuboid. The shape of the casing body 311 can be determined based on the specific shape of the electrode assembly 32. For example, if the electrode assembly 32 is in a cylindrical structure, the casing body 311 can be in the cylindrical structure; if the electrode assembly 32 is in a rectangular structure, the casing body 311 can in the rectangular structure. In Fig. 4, exemplarily, each of the casing body 311 and the electrode assembly 32 is in the rectangular structure.

The material of the casing body 311 can be various, such as copper, iron, aluminum, stainless steel or aluminum alloy, which is not specially restricted in the embodiments of the present application.

There may be one or more electrode assemblies 32 accommodated in the casing body 311. In Fig. 4, there are two electrode assemblies 32 accommodated in the casing body 311.

The electrode assembly 32 includes an electrode body 321 and an electrode tab 322, and the electrode tab 322 is led out from an end of the electrode body 321.

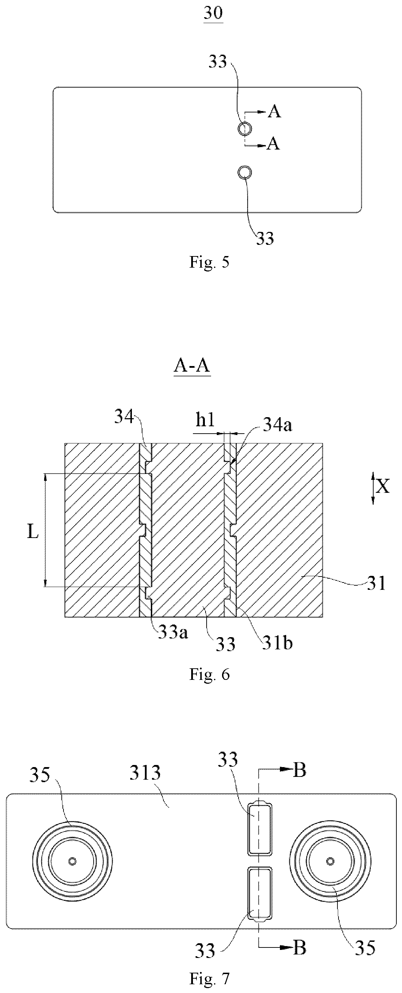

Fig. 5 shows a front view of the battery cell which omits a portion of structure according to an embodiment of present application; Fig. 6 shows a cross-sectional structural view along line A-A in Fig. 5.

As shown in Fig. 4, Fig. 5 and Fig. 6, the embodiments of the present application provide the battery cell 30 including the casing 31 and the connecting terminal 33. The casing 31 includes a mounting hole 31b. The connecting terminal 33 is at least partially arranged in the mounting hole 31b, insulated from the casing 31, and configured for information exchange between an interior and an exterior of the battery cell 30.

Optionally, the mounting hole 31b can be in shape of cylinder, elliptical cylinder or other irregular shapes, which can be set according to the specific shape of the connecting terminal 33. An inner diameter of the mounting hole 31b may be constant or variable. Exemplarily, an inner wall of the mounting hole 31b is provided with a step.

The connecting terminal 33 may be in shape of cylinder, block or other irregular shapes.

It can be understood that the casing 31 can includes a plurality of wall parts connecting with one another. The connecting terminal 33 can be arranged on one surface of the casing 31, or on different wall parts of the casing 31. Of course, one connecting terminal 33 can be arranged on one wall part of the casing 31, or a plurality of connecting terminals 33 can be arranged on one wall part of the casing 31.

Optionally, the mounting hole 31b can be arranged to penetrate through the casing 31, and the entire connecting terminal 33 can be located within the mounting hole 31b. Alternatively, a portion of the connecting terminal 33 can be arranged in the mounting hole 31b, as long as the connecting terminal 33 can electrically connect a related element inside the battery cell 30 with a related element outside the battery cell 30.

The connecting terminal 33 may be an optical fiber, a cable, a conductive structure or the like, which enable the connecting terminal 33 to have the function of transmitting the optical signal, the electrical signal or the like. The optical signal or the electrical signal can serve as a carrier of the information. Therefore, the connecting terminal 33 can serve as a portion of an information transmission path and have the function of transmitting the information.

Optionally, the information transmitted by the connecting terminal 33 may be the working condition inside the battery cell 30 including at least one of pressure, temperature, gas content or other information, or the control signal sent by the control element outside the battery cell 30 to the element inside the battery cell 30.

Optionally, the information outside the battery cell 30, such as the control signal sent by the control element of the battery 10, can be transmitted to the interior of the battery cell 30 by the connecting terminal 33. Exemplarily, the connecting terminal 33 can connect a lithium replenishment component inside the battery 10 with the control element outside battery cell 30, so that the control element can transmit the control signal to the lithium replenishment component inside battery cell 30 through connecting terminal 33, so as to enable the lithium replenishment component to release lithium ions or lithium cells in time, and ensure the normal operation of the battery cell 30.

Optionally, the information inside the battery cell 30, such as internal air pressure or temperature, can be transmitted to the exterior of the battery cell 30 through the connecting terminal 33. Exemplarily, the connecting terminal 33 can connect a pressure sensor inside the battery cell 30 with the control element outside battery cell 30. The pressure sensor transmits the detected information of the pressure inside the battery cell 30 to the control element through the connecting terminal 33, so that the control element can determine whether there is a risk of excessive pressure in battery cell 30 and control the action of the related element, so as to reduce the risk of the excessive pressure inside the battery cell 30.

According to the form of the signal that needs to be transmitted through connecting terminal 33, the wire, the optical fiber, the cable or the like can be connected to the connecting terminal 33. Exemplarily, the connecting terminal 33 can be electrically connected to the control element outside the battery cell 30 through the wire, and electrically connected to the sensor or other elements inside the battery cell 30 through the cable.

In the battery cell 30 provided by the present application, the casing 31 is provided with the mounting hole 31b, and the connecting terminal 33 is at least partially arranged in the mounting hole 31b, so that the information exchange between the interior and the exterior of the battery cell 30 can be achieved, so as to transmit the information such as the working condition at the interior of the battery cell 30 to the exterior of the battery cell 30, or transmit the information such as a control signal from the exterior the battery cell 30 to the interior of the battery cell 30, thereby facilitating the information exchange between a related component inside the battery cell 30 and a related component outside the battery cell 30, ensuring the normal operation of the battery cell 30, and improving the safety performance of the battery cell 30.

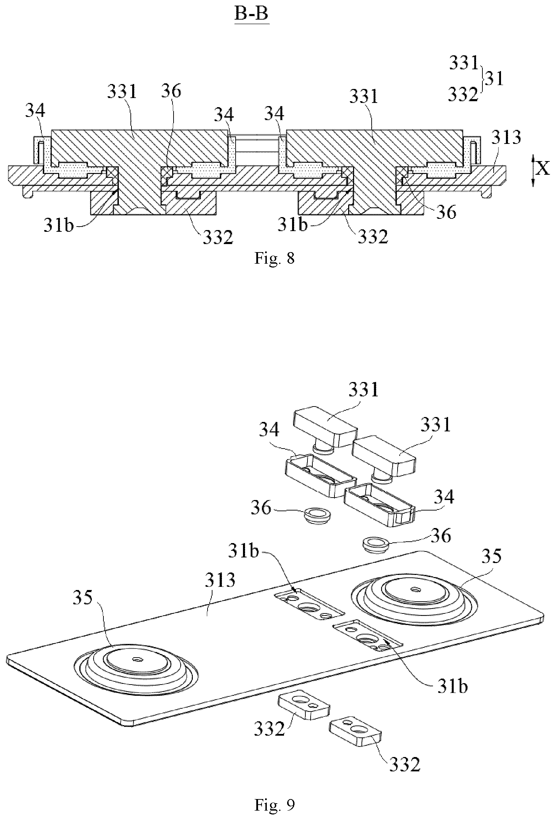

Fig. 7 shows a front view of another battery cell which omits a portion of structure according to an embodiment of present application; Fig. 8 shows a cross-sectional structural view along line B-B in Fig. 7; Fig. 9 shows an exploded schematic view of Fig. 7.

As shown in Fig. 7 to Fig. 9, in some embodiments, there are a plurality of mounting holes 31b spaced apart from one another, and the connecting terminal 33 is arranged in each of the mounting holes 31b.

Generally, the battery cell 30 needs to transmit various types of information such as temperature, pressure and gas composition, and in some cases, a plurality of wires are often required to transmit some types of information simultaneously. Thus, the battery cell includes the plurality of connecting terminals 33 spaced apart from one another, so that the transmission of the information between the interior and exterior of the battery cell 30 can be achieved, and the simultaneous transmission of multiple types of information between the interior and exterior of the battery cell 30 can be achieved.

Optionally, in order to achieve the insulation between the connecting terminal 33 and the casing 31, an insulating component can be additionally arranged between the connecting terminal 33 and the casing 31, or the connecting terminal 33 itself can be provided with the insulating component.

In some embodiments, the battery cell 30 further includes an insulating member 34, and the insulating member 34 is at least partially arranged between the connecting terminal 33 and an inner wall of the mounting hole 31b.

Optionally, a portion of the insulating member 34 can be located between the inner wall of the mounting hole 31b and the connecting terminal 33, or all of the insulating member 34 can be located between the inner wall of the mounting hole 31b and the connecting terminal 33.

Optionally, the insulating member 34 may be in shape of tube and located between the electrode assembly 32, the connecting terminal 33 and the inner wall of the mounting hole 31b. Alternatively, the insulating member 34 includes a circular portion and a circular convex portion protruding outward from an end of the portion. The circular portion is located between the inner wall of the mounting hole 31b and the connecting terminal 33, and the convex portion is located on a surface of a side of the casing 31 to limit the insulating member 34.

Thus, by arranging the insulating member 34, the insulation between the connecting terminal 33 and the casing 31 can be achieved, so that the connecting terminal 33 can transmit the information more accurately and quickly.

As shown in Fig. 5 and Fig. 6, in some embodiments, one of the connecting terminal 33 and the insulating member 34 is provided with a groove 34a, the other is provided with a protrusion 33a, and the groove 34a cooperates with the protrusion 33a.

Optionally, each of the groove 34a and the protrusion 33a can be set in a circular shape, and surround the connecting terminal 33 in a circumference, or each of the groove 34a and the protrusion 33a can be set in an arc shape, which is a portion of the circular shape. Both can achieve the mutual limiting between the connecting terminal 33 and the insulating member 34.

Optionally, the groove 34a can be formed on the connecting terminal 33, and the protrusion 33a can be formed on the insulating member 34; alternatively, the protrusion 33a can be formed on the connecting terminal 33, and the groove 34a can be formed on the insulating member 34.

By cooperating the groove 34a and the protrusion 33a, positions of the connecting terminal 33 and insulating member 34 can be limited, so as to reduce the risk of the relative movement between the connecting terminal and the insulating member.

Referring to Fig. 5 and Fig. 6, in some embodiments, the protrusion 33a is circular and formed on a peripheral surface of the connecting terminal 33, and the groove 34a is circular and formed on the inner wall of the insulating member 34.

The size of the connecting terminal 33 is usually relatively small, and the protrusion 33a is arranged on the connecting terminal 33 to facilitate processing the connecting terminal 33. Each of the protrusion 33a and the groove 34a is set to be circular. Since the protrusion 33a and groove 34a both are circular and can cooperate with each other at any position in a circumferential direction of the protrusion 33a and the groove 34a, the assembly difficulty between the connecting terminal 33 and the insulating member 34 can be reduced, while the limiting effect of the protrusion 33a and groove 34a on the connecting terminal 33 and insulating member 34 can be improved.

The height of a portion of the protrusion 33a protruding from the surface of the connecting terminal 33 is not limited and can be selected according to the actual needs.

In some embodiments, a distance h1 of a portion of the protrusion 33a protruding from the peripheral surface of the connecting terminal 33 satisfies: h1≥0.1mm.

Exemplarily, the distance h1 of a portion of the protrusion 33a protruding from the peripheral surface of the connecting terminal 33 may be 0.1mm, 0.2mm, 0.5mm, 1mm or the like, which can be selected according to the actual needs.

It can be understood that, since a height of a portion of the protrusion 33a protruding from the peripheral surface of the connecting terminal 33 satisfies the above relationship, a mutual cooperation area between the protrusion 33a and the groove 34a can be ensured, and the mutual limiting effect between the connecting terminal 33 and the insulating member 34 can be ensured.

One protrusion 33a may be formed on one connecting terminal 33, or a plurality of protrusions 33a which are spaced apart from one another may be formed on one connecting terminal 33.

In some embodiments, the connecting terminal 33 is provided with a plurality of protrusions 33a spaced apart from one another, and a distance L between two adjacent protrusions satisfies: L≥0.1mm.

Exemplarily, L may be 0.1mm, 0.2mm, 0.5mm, 1mm or the like, which can be selected according to the actual needs.

The plurality of protrusions 33a are spaced apart from one another in an axial direction of the mounting hole 31b. The connecting terminal 33 is provided with the plurality of protrusions 33a spaced apart from one another, so that the mutual cooperation areas between the protrusions 33a and the grooves 34a can be ensured, and the mutual limiting effect between the connecting terminal 33 and the insulating member 34 can be further ensured.

,the plurality of protrusions 33a can be spaced apart from one another uniformly or at any suitable distance in an axial direction of the mounting hole 31b, which can be selected according to the actual needs and are not restricted here.

The distance L between two adjacent protrusions 33a satisfies the above relationship, so as to facilitate the processing of protrusions 33a and grooves 34a, and also conduce to further improving the limiting effect of the cooperation between the protrusions 33a and grooves 34a on the connecting terminal 33 and the insulating member 34.

In some embodiments, the casing 31 includes a first wall 313, and the mounting hole 31b penetrates through the first wall 313.

Optionally, the first wall 313 may be a portion of the casing 311, or the first wall 313 may be a portion of the end cover 312. Alternatively, the first wall 313 includes a portion of the casing 311 and a portion of the end cover 312, and each of the casing 311 and the end cover 312 is provided with the mounting hole 31b, which can be provided according to the actual needs.

The mounting hole 31b may be in shape of cylinder, elliptical cylinder or other shapes, which can be set according to the shape of the connecting terminal 33. The mounting hole 31b penetrates through the first wall 313, so as to facilitate the mounting of the connecting terminal 33.

In some embodiments, the battery cell 30 further includes an electrode terminal 35 arranged on the first wall 313, and the electrode terminal 35 is configured to transmit electrical energy and spaced apart from the connecting terminal 33.

The electrode terminal 35 is used to transmit electrical energy, and can be conductively connected to the electrode tab 322 of the electrode assembly 32 inside the battery cell 30, or the electrode terminal 35 can be electrically connected to the lithium replenishment component inside the battery 10 through wires, so as to transmit electrical energy to the lithium replenishment component at the appropriate time, and release the lithium cells or lithium ions from the lithium supplement component.

The electrode terminal 35 is spaced apart from the connecting terminal 33, so as to reduce the risk of the conductivity between the electrode terminal and the connecting terminal affecting the normal operation of the battery cell 30.

It can be understood that since the electrical connecting terminal 33 or electrode terminal 35 may protrude from the surface of the casing 31, and the connecting terminal 33 is usually connected to the external control element through the wire, the connecting terminal 33, the electrode terminal 35 and the wire can occupy a portion of the additional space outside the casing 31. Both the electrode terminal 33 and the connecting terminal 35 are arranged on the first wall 313, so as to reduce an external space of the battery cell 30 additionally occupied by arranging the connecting terminal 33 and electrode terminal 35, facilitate grouping the battery cells 30 into a battery 10, reduce a volume of the battery 10 grouped by the battery cells 30, and improve the energy density of the battery 10.

In some embodiments, a distance of a portion of the connecting terminal 33 protruding from a side of the first wall 313 is less than or equal to a distance of a portion of the electrode terminal 35 protruding from the same side of the first wall 313 in a thickness direction X of the first wall 313.

It should be noted that the above embodiments compare the distance of the portion of the connecting terminal 33 protruding from a side of the first wall 313 in the thickness direction X with the distance of the portion of the electrode terminal 35 protruding from the same side of the first wall 313 in the thickness direction X.

In the thickness direction X of the first wall, both the connecting terminal 33 and the electrode terminal 35 on the same side of the first wall 313 are arranged to protrude from the first wall 313, and the distance of the portion of the connecting terminal 33 protruding from a side of the first wall 313 is less than or equal to the distance of the portion of the electrode terminal 35 protruding from the same side of the first wall 313.

The distance of the portion of the connecting terminal 33 protruding from the first wall 313 is the distance between an end face of the connecting terminal 33 in the thickness direction X and the first wall 313. Similarly, the distance of the portion of the electrode terminal 35 protruding from the first wall 313 is the distance between an end face of the electrode terminal 35 in the thickness direction X and the first wall 313.

Thus, the connecting terminal 33 does not protrude from the electrode terminal 35 on either side of the thickness direction X of the first wall 313 Thus, the additional space outside the battery cell 30 in the thickness direction X occupied by arranging the connecting terminal 33 can be reduced, and after the battery cells 30 are grouped, a volume of an interior of the battery 10 occupied by the battery cells 30 can be reduced, so as to improve the energy density of the battery 10.

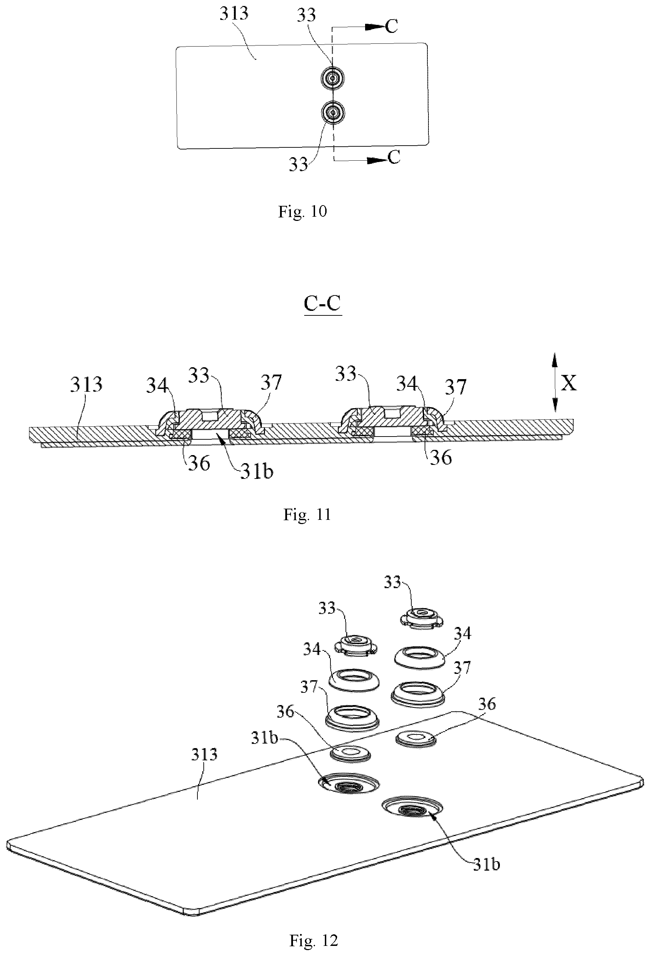

Fig. 10 shows a front view of another battery cell which omits a portion of structure according to an embodiment of present application; Fig. 11 shows a cross-sectional structural view along line C-C in Fig. 10; Fig. 12 shows an exploded schematic view of Fig. 10.

As shown in Fig. 7 to Fig. 12, in some embodiments, the battery cell 30 further includes a sealing member 36, which is at least partially abutted between the first wall 313 and the connecting terminal 33 in a thickness direction X of the first wall 313.

The connecting terminal 33 is provided with a sealing face opposite to a portion of the first wall 313, and the sealing member 36 is arranged between the first wall 313 and the sealing face of the connecting terminal 33, so as to achieve sealing between the interior and the exterior of the casing 31.

Optionally, the sealing member 36 can be arranged inside the mounting hole 31b, or the sealing member 36 can be arranged outside the mounting hole 31b. Exemplarily, the sealing member 36 can be arranged on a side of the first wall 313 away from the accommodating chamber 31a, or the sealing member 36 can be arranged on a side of the first wall 313 close to the accommodating chamber 31a.

The sealing member 36 is arranged, so as to achieve the sealing of the accommodating chamber 31a of the battery cell 30, reduce the risk of the external impurities entering the interior of the battery cell 30 and corroding the battery cell 30, and reduce the risk of the leakage of electrolyte liquid inside the battery cell 30.

As shown in Fig. 10 to Fig. 12, in some embodiments, the battery cell 30 further includes a connecting member 37, which is located on a peripheral side of the insulating member 34 and connected to the first wall 313.

Optionally, the connecting member 37 can be welded, riveted or bonded to the first wall 313. The connecting member 37 is provided and located on the peripheral side of the insulating member 34, during the manufacturing process of the battery cell 30, the connecting terminal 33 can be connected to the connecting member 37 through the insulating member 34, and then the connecting member 37 can be connected to the first wall 313. Exemplarily, the connecting member 37, the insulating member 34 and the connecting terminal 33 can be formed through injection molding process.

Thus, the connecting strength between the connecting terminal 33 and insulating member 34 can be improved, and the mounting of the connecting terminal 33 can be achieved, and the assembly process of the connecting member 37 can be simplified.

In some embodiments, in some embodiments, the connecting member 37 is welded to the casing 31. According to the arrangement, the stability of the connection between the connecting terminal 33 and the casing 31 can be further improved.

In some embodiments, the insulating member 34 is formed by injection molding and connected to a fixing member and the connecting terminal 33.

Thus, after both the connecting member 37 and the connecting terminal 33 are manufactured and formed, the high-temperature flowing plastic is injected between the connecting member and the connecting terminal, and an insulating member 34 is formed after the flowing plastic cools down, so that the insulating connection between the connecting member 37 and the connecting terminal 33 can be achieved. Then, the connecting member 37 is welded to the first wall 313.

Thus, the manufacturing process of battery cell 30 can be simplified, and the connection strength between the connecting terminal 33 and the first wall 313 can be improved.

As shown in Fig. 7 to Fig. 9, in some embodiments, the connecting terminal 33 includes a first sub-portion 331 and a second sub-portion 332 connected to each other, and the first wall 313 is arranged between the first sub-portion 331 and the second sub-portion 332.

Optionally, the first sub-portion 331 can be welded, riveted or threaded to the second sub-portion 332.

In the embodiment where the battery cell 30 includes the sealing member 36, the sealing member 36 can be arranged between the first sub-portion 331 and the first wall 313, or the sealing member 36 can be arranged between the second sub-portion 332 and the first wall 313, which can be arranged according to the actual needs.

Optionally, one of the first sub-portion 331 and second sub-portion 332 includes a convex portion, which is arranged in the mounting hole 31b, and connected to the other of the first sub-portion 331 and second sub-portion 332. Alternatively, both of the first sub-portion 331 and second sub-portion 332 include convex portions, respectively, which are arranged in the mounting hole 31b. The first sub-portion 331 and the second sub-portion 332 are connected through the convex portions.

The connecting terminal 33 includes the first sub-portion 331 and the second sub-portion 332 connected to each other, and the first wall 313 is arranged between the first sub-portion 331 and the second sub-portion 332, so that the connection between the connecting terminal 33 and the first wall 313 can be achieved.

In some embodiments, the first sub-portion 331 is riveted to the second sub-portion 332.

Specifically, one of the first sub-portion 331 and second sub-portion 332 includes a riveting protrusion, and the other includes a riveting hole. The riveting protrusion passes through the riveting hole and arranged into the riveting hole, and then the riveting protrusion is stamped, so that the riveting protrusion is riveted to the riveting hole.

According to the arrangement, the connection strength between the first sub-portion 331 and the second sub portion 332 can be improved, and the connection process between the first sub-portion 331 and the second sub-portion 332 can be simplified.

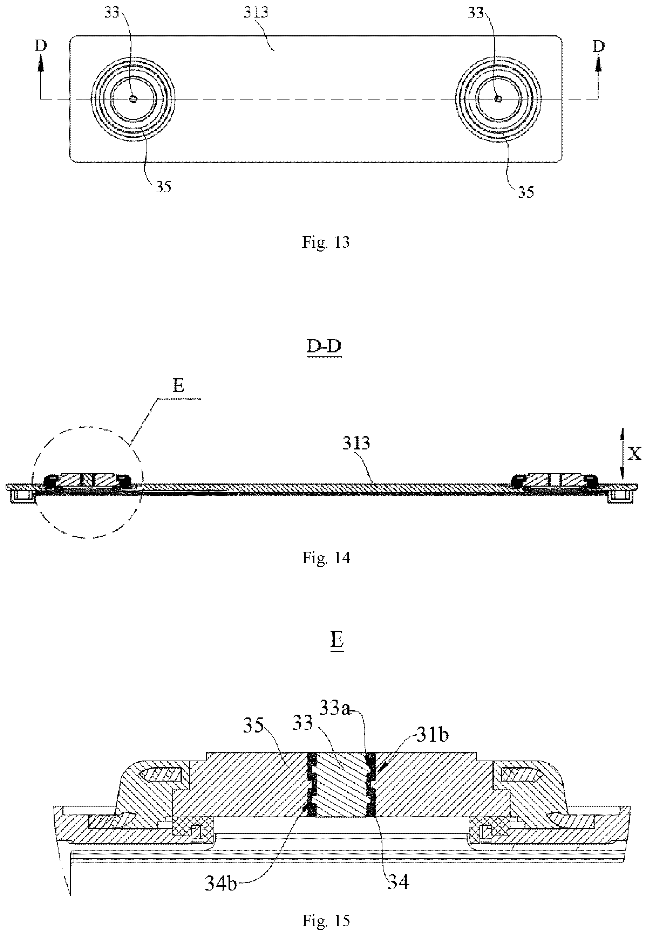

Fig. 13 shows a front view of another battery cell 30 which omits a portion of structure according to an embodiment of present application; Fig. 14 shows a cross-sectional structural view along line C-C in Fig. 13; Fig. 15 and Fig. 16 show locally enlarged views at portion E in Fig. 14 in different embodiments, respectively.

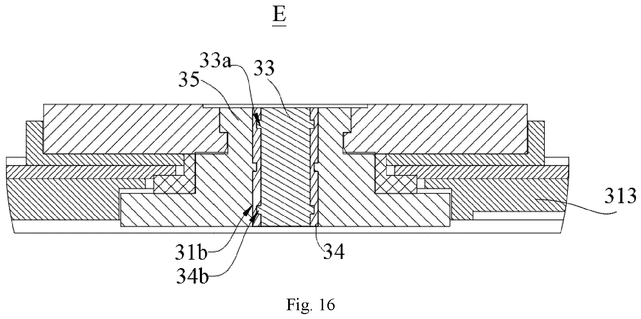

As shown in Fig. 13 and Fig. 16, in some embodiments, the casing 31 includes a first wall 313 and an electrode terminal 35 arranged on the first wall 313, the electrode terminal 35 is configured to transmit electrical energy and is insulated from the first wall 313, the mounting hole 31b penetrates through the electrode terminal 35 in a thickness direction X of the first wall 35, and the connecting terminal 33 is connected to the electrode terminal 35.

Optionally, the electrode terminal 35 is electrically connected to the electrode tab 322 of the electrode assembly 32 inside the battery cell 30, or electrically connected to the lithium replenishment component inside the battery cell 30 through the wire, which can be selected according to the actual needs.

The mounting hole 31b penetrates through the electrode terminal 35, and the connecting terminal 33 is connected to the electrode terminal 35, so that a space on the first wall 313 can be saved, other components can be arranged on the first wall 313, and the reasonable arrangement of various components of the battery cell 30 can be achieved.

As shown in Fig. 4, in some embodiments, the battery cell 30 further includes a current collector 38 and an electrode assembly 32, the current collector 38 and the electrode assembly 32 are accommodated in the casing 31, the current collector 38 is electrically connected to the electrode assembly 32 and the electrode terminal 35, and the current collector 38 is provided with a through hole 38a; the connecting terminal 33 is arranged to pass through the through hole 38a; or the battery cell 30 further includes a connecting wire, which passes through the through hole 38a and is electrically connected to the connecting terminal 33.

Generally, the connecting terminal 33 is electrically connected to the element such as the sensor inside the battery cell 30 through the cable or other wire. The current collector 38 is provided with the through hole 38a, and the connecting terminal 33 can pass through the through hole 38a, or the connecting wire can be threaded through the through hole 38a, so that the connecting terminal 33 or the wire can pass through and connected to the current collector 38.

According to the arrangement, even in the case that the current collector 38 covers the electrode terminal 35, the electrical connection between the connecting terminal 33 and the internal components of the battery cell 30 can still be achieved, so as to facilitate the connecting terminal 33 transmitting the information.

As shown in Fig. 4, in some embodiments, the battery cell 30 further includes a detecting element 39. The detecting element 39 is arranged in the accommodating chamber 31a, configured to detect a working condition of the battery cell 30, and electrically connected to the connecting terminal 33.

Optionally, the detecting element 39 may be the sensor or the like, which can be used to detect the information such as pressure, temperature or gas composition inside the battery cell 30, and transmit the above information to the element such as the control element outside the battery cell 30 through the connecting terminal 33, so that the element such as the control element can adjust the related working parameters in time according to the working condition of the battery cell 30, and ensure the normal operation of the battery cell 30.

Therefore, the battery cell 30 is provided with the detecting element 39, the working condition of the battery cell 30 can be detected by the detecting element 39, so that the normal operation of the battery cell 30 can be ensured and the safety performance of the battery cell 30 can be improved.

In some embodiments, the detecting element 39 includes a sensor.

Optionally, the detecting element 39 can be at least one of a pressure sensor, a temperature sensor, a gas composition detecting sensor or a stress sensor. The pressure sensor, the temperature sensor, the gas composition detecting sensor and the stress sensor can be used to detect the working parameters such as the air pressure inside the battery cell 30, the temperature of the related structure, the gas composition content inside the battery cell 30 and the internal stress of the related component such as the electrode assembly 32, respectively. The above working parameters are transmitted to the element such as the control element outside the battery cell 30 through the connecting terminal 33, so as to achieve the information exchange between the interior and the interior of the battery cell 30. The control element determines whether the transmitted working parameters are within the normal working range. If there is an abnormality, the related working parameters can be adjusted in time, so as to further ensure the normal operation of the battery cell 30, and improve the safety performance of the battery cell 30.

Embodiments of the present application provide a battery 10 including the battery cell 30 according to any one of the embodiments as described above.

According to the embodiments of the present application, the battery 10 has the same technical effect as described above due to including the battery cell 30 according to the embodiments of the present application, which will not be repeated here.

In some embodiments, the battery 10 further includes a control element, and the control element, is electrically connected to the connecting terminal 33 and configured to transmit an information to the connecting terminal 33.

Optionally, the control element can transmit the information such as the control signal to the connecting terminal 33, and transmit it to a related performing component inside the battery cell 30 through the connecting terminal 33. Alternatively, the connecting terminal 33 can transmit information such as pressure, temperature, stress and gas composition inside the battery cell 30 to the control element, so that the control element can estimate the working condition of the battery cell 30, control a related component to adjust the working parameter, or issue an alarm for the operator to adjust the working parameter of the battery 10.

Therefore, the battery 10 includes the control element, so that the normal operation of the battery 10 can be further ensured, and the safety performance of the battery 10 can be improved.

Embodiments of the present application provide an electricity-consuming device including the battery 10 according to any one of the embodiments as described above, which is configured to provide electrical energy.

The electricity-consuming device provided by the embodiments of the present application has the same technical effect as described above due to including the battery 10 according to any one of the embodiments as described above, which will not be repeated here.

It should be noted that the embodiments and features in the embodiments of the present application can be combined with one another without conflict.

Finally, it should be noted that the above embodiments are only used to illustrate the technical solutions of the present application and do not to restrict them; although the present application has been described in detail with reference to the various embodiments as described above, those skilled in the art should understand that they can still modify the technical solutions recited in the embodiments as described above, or equivalently replace some of the technical features; these modifications or substitutions do not separate the essence of the corresponding technical solutions from the gist and the scope of the technical solutions of the various embodiments of the present application.

## Claims

1. A battery cell comprising:
a casing, comprising a mounting hole; and
a connecting terminal, at least partially arranged in the mounting hole, insulated from the casing, and configured for information exchange between an interior and an exterior of the battery cell.

2. The battery cell according to claim 1, wherein the casing comprises a plurality of mounting holes spaced apart from one another, and the connecting terminal is arranged in each of the mounting holes.

3. The battery cell according to claim 1 or 2, further comprising an insulating member, wherein the insulating member is at least partially arranged between the connecting terminal and an inner wall of the mounting hole.

4. The battery cell according to claim 3, wherein one of the connecting terminal and the insulating member is provided with a groove, the other is provided with a protrusion, and the groove cooperates with the protrusion.

5. The battery cell according to claim 4, wherein the protrusion is circular and formed on a peripheral surface of the connecting terminal, and the groove is circular and formed on the inner wall of the insulating member.

6. The battery cell according to claim 4 or 5, wherein a distance h1 of a portion of the protrusion protruding from the peripheral surface of the connecting terminal satisfies: h1≥0.1mm.

7. The battery cell according to any one of claims 4 to 6, wherein the connecting terminal is provided with a plurality of protrusions spaced apart from one another, and a distance L between two adjacent protrusions satisfies: L≥0.1mm.

8. The battery cell according to any one of claims 1 to 7, wherein the casing comprises a first wall, and the mounting hole penetrates through the first wall.

9. The battery cell according to claim 8, further comprising an electrode terminal arranged on the first wall, wherein the electrode terminal is configured to transmit electrical energy and is spaced apart from the connecting terminal.

10. The battery cell according to claim 9, wherein a distance of a portion of the connecting terminal protruding from a side of the first wall is less than or equal to a distance of a portion of the electrode terminal protruding from the same side of the first wall in a thickness direction of the first wall.

11. The battery cell according to any one of claims 8 to 10, further comprising a sealing member, which is at least partially abutted between the first wall and the connecting terminal in a thickness direction of the first wall.

12. The battery cell according to any one of claims 8 to 11, further comprising a connecting member, which is located on a peripheral side of an insulating member and connected to the first wall.

13. The battery cell according to claim 12, wherein the connecting member is welded to the casing.

14. The battery cell according to claim 12 or 13, wherein the insulating member is formed by injection molding and connected to the connecting member and the connecting terminal.

15. The battery cell according to any one of claims 8 to 14, wherein the connecting terminal comprises a first sub-portion and a second sub-portion connected to each other, and the first wall is arranged between the first sub-portion and the second sub-portion.

16. The battery cell according to claim 15, wherein the first sub-portion is riveted to the second sub-portion.

17. The battery cell according to any one of claims 1 to 7, wherein the casing comprises a first wall and an electrode terminal arranged on the first wall, the electrode terminal is configured to transmit electrical energy and is insulated from the first wall, the mounting hole penetrates through the electrode terminal in a thickness direction of the first wall, and the connecting terminal is connected to the electrode terminal.

18. The battery cell according to claim 17, further comprising a current collector and an electrode assembly, wherein the current collector and the electrode assembly are accommodated in the casing, the current collector is electrically connected to the electrode assembly and the electrode terminal, and the current collector is provided with a through hole;
the connecting terminal is arranged to pass through the through hole; or
the battery cell further comprises a connecting wire, which passes through the through hole and is electrically connected to the connecting terminal.

19. The battery cell according to any one of claims 1 to 18, further comprising a detecting element, wherein the detecting element is arranged in the accommodating chamber, configured to detect a working condition of the battery cell, and is electrically connected to the connecting terminal.

20. The battery cell according to claim 19, wherein the detecting element comprises a sensor.

21. A battery, comprising the battery cell according to any one of claims 1 to 20.

22. The battery according to claim 21, further comprising a control unit, wherein the control unit is electrically connected to the connecting terminal and configured to transmit an information to the connecting terminal.

23. An electricity-consuming device, comprising the battery according to any one of claims 20 to 22, which is configured to supply electrical energy.
